# EUROPEAN PATENT APPLICATION

(11) **EP 4 707 856 A1**
(43) Date of publication of application: **11.03.2026**
(21) Application number: 25199299.6
(22) Date of filing: 01.09.2025
(51) Int. Cl.: G01S 7/484, G01S 7/486, G01S 17/42, G01S 17/931

(54) **LIDAR CONTROL METHOD AND APPARATUS, TERMINAL DEVICE, AND STORAGE MEDIUM**

(30) Priority: 04.09.2024 CN 202411232908
(71) Applicant: Suteng Innovation Technology Co., Ltd, Shenzhen City Guangdong 518000 (CN)
(72) Inventor: CHEN, Huazhou, Shenzhen City (CN)
(74) Representative: Ran, Handong

(57) **Abstract**

The application provides a LiDAR control method and device, a terminal device and a storage medium, and the method comprises the following steps: in the case that it is determined according to point cloud data of a previous frame that a high-reflectivity object exists in a detection area, determining the spatial position of the high-reflectivity object according to the point cloud data of the previous frame; determining a target adjustment channel according to the spatial position of the high-reflectivity object; adjusting the emission strategy of the target adjustment channel to a high-reflectivity emission strategy; and controlling the LiDAR to perform scanning in a current scanning cycle according to the adjusted emission strategy, and controlling the switching of the channel corresponding to the high-reflectivity object in the current scanning cycle to the high-reflectivity emission strategy in advance, so that the interference of the reflected echo generated by the high-reflectivity object can be better reduced, and the detection precision of the LiDAR is improved.

## Description

### TECHNICAL FIELD

The application belongs to the technical field of LiDARs, and particularly relates to a LiDAR control method and apparatus, a terminal device, and a storage medium.

### BACKGROUND

For a high-resolution and high-frame-rate LiDAR, the degree of crosstalk between channels is exacerbated due to the small physical isolation degree of adjacent channels. In order to reduce the crosstalk between channels, transmission coding and a selected appropriate filtering strategy can be used to distinguish a real echo and a crosstalk echo. However, due to the large number of channels and the number of transmission codes, concurrent channels exist, and there is certain interference between the concurrent channels. In the case of a high-reflectivity object, more serious crosstalk is generated.

### SUMMARY

The LiDAR control method and apparatus, the terminal device, and the storage medium can improve the ability of a LiDAR system to resist crosstalk caused by a high-reflectivity object and improve the detection accuracy of the LiDAR system.

In a first aspect, the application provides a LiDAR control method, including:

In a case where it is determined, according to point cloud data of a previous scanning cycle, that a high-reflectivity object exists in a detection area, a spatial position of the high-reflectivity object is determined according to the point cloud data of the previous scanning cycle;

A target adjustment channel is determined according to the spatial position of the high-reflectivity object;

An emission strategy of the target adjustment channel is adjusted to a high-reflectivity emission strategy;

The LiDAR is controlled to perform scanning of a current scanning cycle according to the adjusted emission strategy.

In an implementation form of the first aspect, the determining of the target adjustment channel according to the spatial position of the high-reflectivity object includes:

The target adjustment channel is determined according to driving information of the vehicle and the spatial position of the high-reflectivity object.

In an implementation form of the first aspect, the determining of the target adjustment channel according to the driving information of the vehicle and the spatial position of the high-reflectivity object includes:

The spatial position of the high-reflectivity object is corrected according to the driving information of the vehicle;

The target adjustment channel is determined according to the corrected spatial position of the high-reflectivity object.

In an implementation form of the first aspect, the driving information includes a driving speed and a driving direction, and the determining of the target adjustment channel according to the driving information of the vehicle and the spatial position of the high-reflectivity object includes:

A position offset of the high-reflectivity object is determined according to the driving speed and the driving direction;

A predicted position of the high-reflectivity object is determined according to the position offset of the high-reflectivity object and the spatial position of the high-reflectivity object;

The target adjustment channel is determined according to the predicted position of the high-reflectivity object.

In an implementation form of the first aspect, the vehicle driving information comprises steering information and a historical driving trajectory, and the target adjustment channel is determined according to the driving information of the vehicle and the spatial position of the high-reflectivity object, comprising:
predicting a driving trajectory of the vehicle according to the steering information and the historical driving trajectory;
determining a position offset of the high-reflectivity object based on the predicted driving trajectory;
determining a predicted position of the high-reflectivity object according to the position offset of the high-reflectivity object and the spatial position of the high-reflectivity object;
determining the target adjustment channel according to the predicted position of the high-reflectivity object.

In an implementation form of the first aspect, the LiDAR control method further comprises:
calculating a switching time margin according to a driving speed of the vehicle;
switching the emission strategy of the target adjustment channel according to the switching time margin.

In an implementation form of the first aspect, the previous scanning cycle and the current scanning cycle are in the same frame or in two adjacent frames.

In a second aspect, an embodiment of the present application provides a LiDAR control device, comprising:
a first determining unit, configured to, in a case where it is determined that a high-reflectivity object exists in the detection area according to the point cloud data of the previous scanning cycle, determine a spatial position of the high-reflectivity object according to the point cloud data of the previous scanning cycle;
a second determining unit, configured to determine a target adjustment channel according to the spatial position of the high-reflectivity object;
an adjusting unit, configured to adjust an emission strategy of the target adjustment channel to a high-reflectivity emission strategy;
a scan control unit, configured to control the LiDAR to perform scanning in a current scanning cycle according to the adjusted emission strategy.

In a third aspect, an embodiment of the present application provides a terminal device, comprising a processor, a memory, and a computer program stored in the memory and executable on the processor, wherein the processor executes the computer program to implement the method in the first aspect or any optional implementation form of the first aspect.

In a fourth aspect, an embodiment of the present application provides a computer-readable storage medium storing a computer program, wherein the computer program is executed by a processor to implement the method in the first aspect or any optional implementation form of the first aspect.

In a fifth aspect, an embodiment of the present application provides a computer program product, which, when executed on a terminal device, enables the terminal device to perform the method in the first aspect or any optional implementation form of the first aspect.

Compared with the prior art, the embodiment of the present application has the beneficial effects that:

The LiDAR control method and device, the terminal device and the computer readable storage medium can control the switching of the channel corresponding to the high-reflectivity object in the current scanning cycle to the high-reflectivity emission strategy in advance according to the position of the high-reflectivity object determined according to the point cloud data of the last frame, can better reduce the interference of the reflection echo generated by the high-reflectivity object, and improve the detection precision of the LiDAR.

### BRIEF DESCRIPTION OF DRAWINGS

In order to more clearly illustrate the technical solutions in the embodiments of the present application, the following briefly introduces the drawings needed in the embodiments or prior art description. Obviously, the drawings in the following description merely related to some embodiments of the present application, and for those skilled in the art, on the basis of the drawings, other drawings can also be obtained without creative efforts.
FIG. 1 is a structure schematic diagram of a LiDAR in an embodiment of the present application;
FIG. 2 is a schematic diagram of the impact of an object with high-reflectivity on detection;
FIG. 3 is an implementation flow schematic diagram of the LiDAR control method provided in the embodiment of the present application;
FIG. 4 is a point cloud schematic diagram of the Mth scanning and M+1th scanning in the embodiment of the present application;
FIG. 5 is an implementation flow schematic diagram of another LiDAR control method provided in the embodiment of the present application;
FIG. 6 is a structure schematic diagram of a LiDAR control apparatus provided in the embodiment of the present application;
FIG. 7 is a structure schematic diagram of a terminal device provided in the embodiment of the present application;
FIG. 8 is a structure schematic diagram of a computer-readable storage medium provided in the embodiment of the present application.

### DETAILED DESCRIPTION

In the following description, for the purposes of explanation rather than limitation, specific details are set forth such as the particular architecture, techniques, etc., in order to provide a thorough understanding of the embodiments of the application. However, it should be understood that the application can be practiced in other embodiments that do not consist in these specific details. In other instances, well known systems, devices, circuits, and methods have not been shown in detail in order not to unnecessarily obscure the present application.

It is to be understood that the terminology used herein is for the purpose of describing particular embodiments of the application only and is not intended to be limiting. In addition, in the description of the application herein and in the appended claims, the terms "first", "second", "third", etc. are used merely for distinguishing between similar elements and can not necessarily have an ordinal implication regarding importance or order.

It should also be understood that, in the description of the application, reference to "an embodiment" or "some embodiments" or "one embodiment" or "another embodiment" or the like means that a particular feature, structure, or characteristic described in connection with the embodiment is included in at least one embodiment of the application. Thus, the appearances of the phrase "in one embodiment" or "in some embodiments" or "in other embodiments" or "in additional embodiments" or the like in various places throughout the specification are not necessarily all referring to the same embodiment, nor are separate or alternative embodiments necessarily mutually exclusive of other embodiments. The terms "comprises," "comprising," "includes," "including," "has," "having" or the like are meant to be non-limiting and mean "including but not limited to" unless specifically indicated otherwise.

A LiDAR is a LiDAR system for detecting the position, velocity, etc., of a target by emitting laser beams. In addition to detecting the distance of an object, the LiDAR can also detect the reflectivity of the object for target identification. The specific working principle of the LiDAR is to emit a detection signal to the target. After arriving at the target, the detection signal is reflected by the target so as to form echo data. The LiDAR receives the signal (echo data) reflected by the target, and can determine the relevant information of the target, such as target distance, position, height, velocity, attitude, shape, reflectivity, etc., based on the echo data, so as to achieve target detection, target tracking, and target identification. Herein, the reflectivity of an object refers to the percentage of the radiation energy reflected by the object to the total radiation energy of the incident signal. The reflectivity of different objects is different, and mainly determined by the surface property of the object, the wavelength of the incident signal, and the angle of incidence, etc.

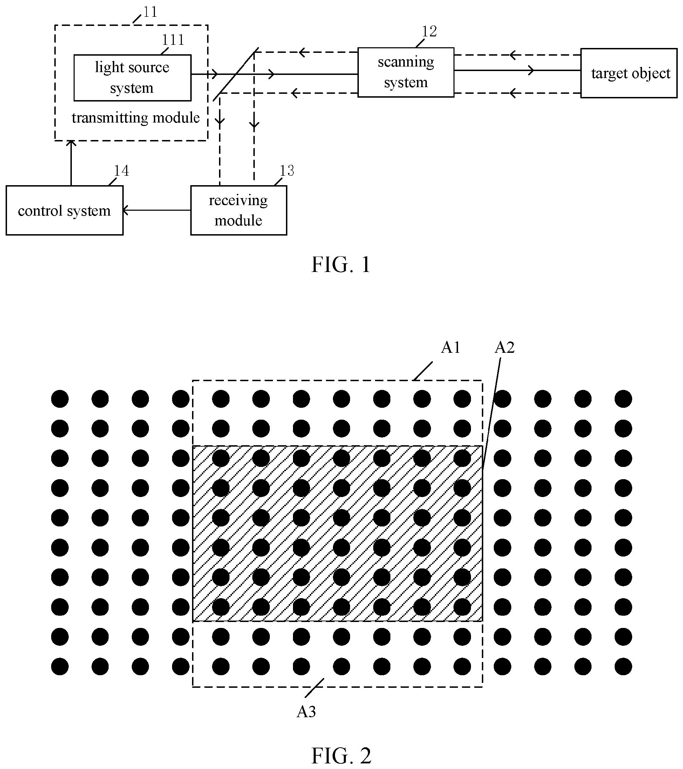

Exemplarily, referring to FIG. 1, a schematic structural diagram of a LiDAR is shown. As shown in FIG. 1, the LiDAR 10 generally comprises a transmitting module 11, a scanning system 12, a receiving module 13 and a control system 14. The transmitting module 11 can comprise a light source system 111.

The light source system 111 is used to generate a laser beam for detection of the LiDAR 10. Specifically, the light source system 111 can comprise a laser and optical devices, for example a transmitting lens set. The scanning system 12 is used to make angular deflection of the laser beam generated by the light source system 111, so that the laser beam can hit different positions at different times. The scanning system 12 can be a mechanical scanning system (i.e. a rotating driving platform) or a semi-solid scanning system (i.e. a rotating mirror, vibrating mirror or a combination of the two). The form of the scanning system is not limited by the application.

It can be understood that the LiDAR in the application can also be a solid-state LiDAR, that is, scanning is implemented by controlling the light sources at different angles to emit light in sequence. The laser beam emitted by the light source system is reflected by the target object after reaching the target object. The reflected light pulses are received by a receiving sensor (not shown in the figure) of the receiving module 13, and then processed by an echo signal processing circuit to generate corresponding detection information.

It should be noted that the light source system can use a vertical cavity surface emitting laser (VCSEL) or an edge emitting laser (EEL) device, and the sensor can be composed of a Silicon photomultiplier (SiPM) array. The SiPM array is composed of a large number of (generally including several hundred to several thousand Avalanche Photodiode (APD) units, each APD unit is formed by an APD and a large resistance quenching resistor connected in series, and the APD units are connected in parallel to form a surface array (i.e. the SiPM array).

The on-vehicle LiDAR can acquire a three-dimensional image of the physical space, thereby detecting the driving environment. Automatic driving requires the LiDAR to accurately distinguish a small target object at a long distance. In order to improve the recognition accuracy of the LiDAR on the small target object at a long distance, a LiDAR with a plurality of parallel transmitting and receiving channels is usually used for detection, and such a LiDAR usually comprises a plurality of laser emitters and a plurality of laser receivers arranged densely.

However, due to the improvement of detection accuracy in the field of LiDARs, the laser emitters and the laser receivers are densely arranged, so it is difficult for the optical design of the LiDAR to have no optical crosstalk between adjacent channels, and thus the LiDAR has optical crosstalk between adjacent channels to a large extent.

Specifically, as the dot frequency and the ranging distance increase, there is crosstalk between the channels of the LiDAR. Suppose that the effective measurement distance of the LiDAR is L, the total scanning time is Ttot, and the total dot frequency is Ntot. Then the average time for each dot is as follows: Tave = Ttot / Ntot. The time of flight of a light pulse is as follows: t = 2L/c, wherein c is the speed of light. When t < Tave, only one receiving channel of the LiDAR is working in each analysis time period, which can effectively avoid crosstalk between channels. As the dot frequency and the ranging distance increase, Tave decreases continuously, and the condition t > Tave can occur. In this case, multiple receiving channels are working in parallel in the same time period, such that crosstalk between adjacent receiving channels can occur.

Since the vehicle-mounted LiDAR detects the driving environment, the scenes on the road include two types of objects, one is a Lambertian object and the other is a highly reflective object. Among them, the Lambertian object means an object that uniformly diverges incident laser to achieve diffuse reflection, such as trees on the road. The highly reflective object means an object having a highly directional reflected echo and a same direction as the incident laser, such as a road sign on the road. The echo intensity of the highly reflective object is 200 times greater than that of the Lambertian object, and the reflected echo produced by the highly reflective object causes a serious crosstalk to the reflected echo produced by the Lambertian object (i.e. non-highly reflective object), thereby reducing the detection accuracy of the LiDAR.

For example, Fig. 2 shows a schematic diagram of the influence of a high-reflectivity object on the detection results. It is assumed that the points in the first area A1, the second area A2, and the third area A3 have a concurrent relationship. If the high-reflectivity object exists in the second area A2, the detection of the points in the second area A2 can cause crosstalk to the points in the first area A1 and the third area A3.

Based on this, the LiDAR control method provided in the embodiments of the application can determine the position of the high-reflectivity object based on the point cloud data of the previous frame. The high-reflectivity object is switched to the high-reflectivity emission strategy in advance in the current scanning cycle to correspond to the channel of the high-reflectivity object, thereby better reducing the interference of the reflection echoes generated by the high-reflectivity object and improving the detection accuracy of the LiDAR.

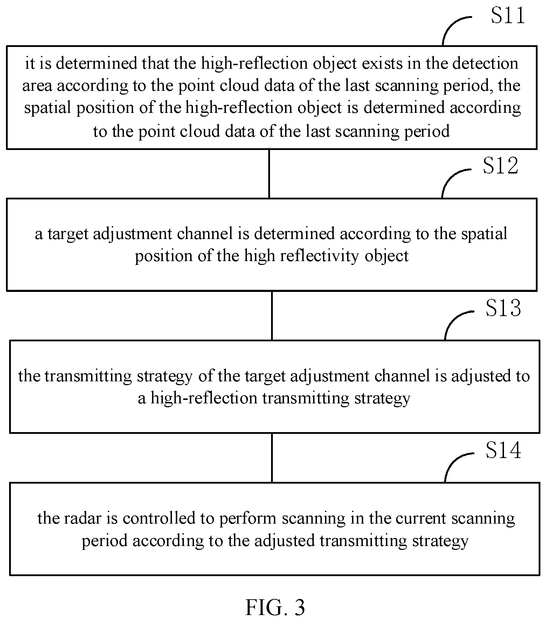

The LiDAR control method provided by the embodiment of the application is described in detail as follows:
referring to Fig. 3, Fig. 3 shows an implementation process of a LiDAR control method provided by the embodiment of the application. As shown in Fig. 3, the LiDAR control method specifically can include S11 to S14.

It should be noted that the execution subject of the LiDAR control method provided by the embodiment of the application can be the LiDAR 10, and specifically can be a control system in the LiDAR 10. Of course, the execution subject of the LiDAR control method can also be a terminal device in communication connection with the LiDAR 10. The terminal device can be a mobile phone, a desktop computer, a notebook computer, a tablet computer or a wearable device and the like, or can be a cloud server, a LiDAR-assisted computer or the like in various application scenarios, and the application does not make a specific limitation here. The execution subject is taken as the LiDAR 10 for description:
In S11, if it is determined that the high-reflectivity object exists in the detection area according to the point cloud data of the previous scanning cycle, the spatial position of the high-reflectivity object is determined according to the point cloud data of the previous scanning cycle.

In the embodiment of the application, the LiDAR analyzes whether a high-reflectivity object exists in the detection area according to the point cloud data of the previous scanning cycle, and if so, determines the spatial position of the high-reflectivity object according to the point cloud data of the previous scanning cycle.

As can be understood, a high-reflectivity object that exists in the detection area does not appear out of the blue, and therefore, the position where the high-reflectivity object is located is continuous in time, that is, if a high-reflectivity object is detected at a position in the detection area in a scanning cycle, a high-reflectivity object will be detected in the vicinity of the position in the next scanning cycle, and if the emission strategy is switched until the high-reflectivity object is detected in the next frame, the detection result of the non-high-reflectivity object in the first few scanning cycles of the next frame will be interfered with by the emission echo of the high-reflectivity object.

In specific application, determining whether the high-reflectivity object exists in the detection area according to the point cloud data of the previous scanning cycle can be analyzing the reflectivity of the target object in the detection area according to the point cloud data, and determining whether the high-reflectivity object exists in the detection area based on the reflectivity.

In some implementation modes, whether the high-reflectivity object exists in the detection area can also be determined based on the echo amplitude, pulse width, echo area, echo power, echo energy, and other indicators of echo data.

In specific application, after the LiDAR receives the echo data and recovers the point cloud data based on the echo data, the echo intensity of each point in the point cloud data can be acquired. If the echo intensity is greater than a preset intensity threshold, it can be determined that the point belongs to the high-reflectivity object. By collecting the points belonging to the high-reflectivity object, the spatial position of the high-reflectivity object can be determined. It should be noted that the preset intensity threshold can be set according to the specific parameters and performance parameters of the device in the actual application, and the application does not have specific limitations in this regard.

In a specific application, the LiDAR can determine, based on the received point cloud data, an echo area value of the echo point cloud. If an echo area value of a point is greater than a preset area threshold, it can be determined that the point is a point corresponding to the high-reflectivity object, and by collecting all the points belonging to the high-reflectivity object, the spatial position of the high-reflectivity object can be determined. It should be noted that the preset area threshold can be set according to the specific parameters and performance parameters of equipment in an actual application process, and the embodiment of the application does not impose specific limitations in this respect.

In specific applications, the LiDAR can also determine the reflectivity of each point according to the received point cloud data. If the reflectivity of a point is greater than a preset reflectivity threshold, it can be determined that the point is a point corresponding to a high-reflectivity object, and the space position of the high-reflectivity object can be determined by the set of all points that belong to the high-reflectivity object. It should be noted that the preset reflectivity threshold can be set according to the specific parameters and performance parameters of the device in the actual application process and the environmental parameters in the actual application scenario, and the application does not make a specific limitation here.

It should be noted that the calculation methods of the echo intensity, the echo area value and the reflectivity can be implemented based on existing calculation methods, and details are not described herein.

In S12, a target adjustment channel is determined according to the spatial position of the high-reflectivity object.

In a specific application, after the spatial position of the high-reflectivity object is determined, the receiving channel corresponding to the high-reflectivity object can be determined according to the source of the point cloud (i.e., which channel receives the point cloud formed by the echo), and then the corresponding transmitting channel can be determined.

In a specific application, the target adjustment channel can be the transmitting channel determined according to the position of the high-reflectivity object.

In S13, the emission strategy of the target adjustment channel is adjusted to a high-reflectivity emission strategy.

In a specific application, the adjustment of the emission strategy of the target adjustment channel to the high-reflectivity emission strategy can be adjusting the transmitting jitter time of the target adjustment channel, so that the transmitting time of the target adjustment channel and the transmitting time of the non-target adjustment channel are different, thereby reducing the interference of the echo of the high-reflectivity object on the echo of other objects.

The high-reflectivity emission strategy can also be adjusting the transmitting power of the target adjustment channel, specifically, reducing the transmitting power of the target adjustment channel to reduce the echo intensity of the high-reflectivity object, thereby reducing the interference of the echo of the high-reflectivity object on the echo of other objects.

In S14, the LiDAR is controlled to perform scanning in the current scanning cycle according to the adjusted emission strategy.

In a specific application, the control of the LiDAR to perform scanning in the current scanning cycle according to the adjusted emission strategy can be that, for the non-target adjustment channel, transmitting is performed based on the original transmitting code, and for the target adjustment channel, transmitting is performed according to the high-reflectivity emission strategy.

The detection fields of view of the previous scanning cycle and the current scanning cycle are fully overlapped or partially overlapped.

It can be understood that the adjustment of the emission strategy of the target adjustment channel is completed before the current scanning cycle starts, that is, when the current scanning cycle is performed, the emission strategy of the transmitting channel corresponding to the position where the high-reflectivity object can be located is adjusted to the high-reflectivity emission strategy, so that the crosstalk problem caused by the high-reflectivity object can be effectively reduced in the scanning process of the current scanning cycle.

In the case of only one scanning cycle in a frame, the spatial position recognition of the high-reflectivity object is performed according to the point cloud data of the previous scanning cycle, and the emission strategy of the current scanning cycle is adjusted based on the recognition result, which is equivalent to performing the spatial position recognition of the high-reflectivity object according to the point cloud data of the last frame, and adjusting the emission strategy of the current scanning cycle based on the recognition result.

In the method, before each scanning cycle is performed, the spatial position of the high-reflectivity object is identified based on the point cloud data of the previous scanning cycle. Before the M+1 scanning cycle is started, the spatial position of the high-reflectivity object is identified based on the point cloud data of the M scanning cycle, the emission strategy is adjusted based on the identification result, the emission strategy of the M+1 scanning cycle is adjusted based on the identification result, the LiDAR is controlled to perform the scanning of the M+1 scanning cycle based on the adjusted emission strategy, before the M+2 scanning cycle is started, the spatial position of the high-reflectivity object is identified based on the point cloud data of the M+1 scanning cycle, the emission strategy of the M+2 scanning cycle is adjusted based on the identification result, and the LiDAR is controlled to perform the scanning of the M+2 scanning cycle based on the adjusted emission strategy.

It can be understood that the emission strategy can be adjusted according to a detection accuracy requirement. As an example, in a specific application, for a case where one frame has multiple scanning cycles, the spatial position of the high-reflectivity object can be identified based on the point cloud data of the whole previous frame, and the emission strategy of the next frame scanning can be adjusted based on the identification result.

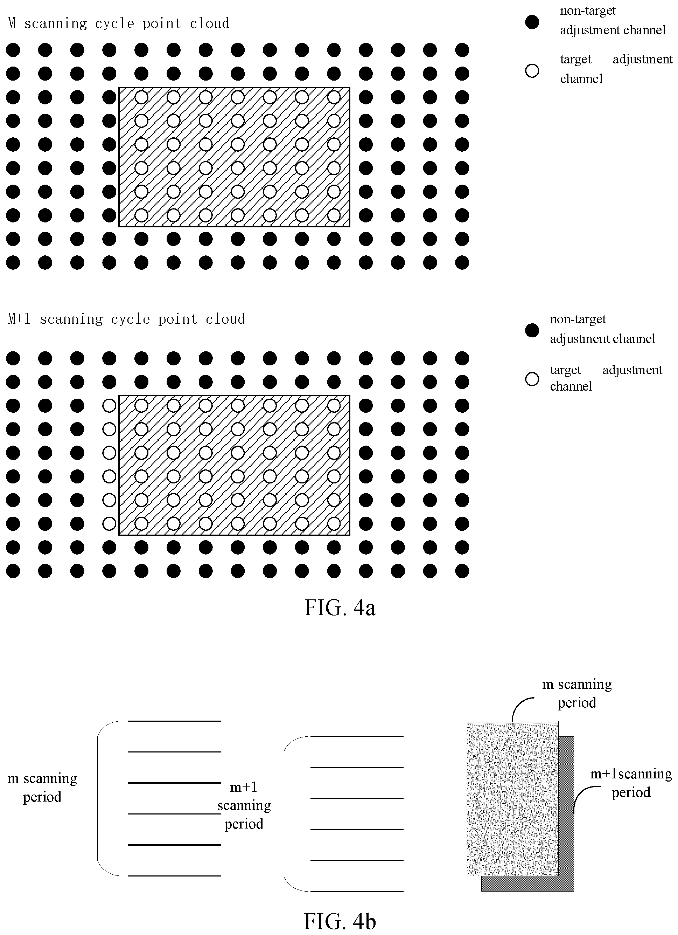

Referring to FIG. 4a, FIG. 4a shows a schematic diagram of point clouds of the M scanning cycle and the M+1 scanning cycle, where the square frame represents the high-reflectivity object. After the high-reflectivity object is identified in the M scanning cycle, the emission strategy of the corresponding emission channel is adjusted to the high-reflectivity emission strategy before the corresponding position of the high-reflectivity object is reached in the M+1 scanning cycle. Therefore, the crosstalk of the M+1 scanning cycle can be better suppressed.

In a specific application, the previous scanning cycle and the current scanning cycle are in the same frame or in adj acent two frames. The detection fields of view corresponding to the current scanning cycle and the previous scanning cycle are partially or fully overlapped.

For a LiDAR system performing multiple scanning in one frame, one frame of point cloud data includes point cloud data obtained by multiple scanning cycles, and for emission control of the multiple scanning cycles in the frame, after the spatial position of the high-reflectivity object is determined according to the previous scanning cycle, the emission strategy of the corresponding emission channel is adjusted to the high-reflectivity emission strategy before the current scanning cycle is started. Since the interval time of two continuous scanning cycles in one frame is shorter than the frame interval, the crosstalk generated by the high-reflectivity object can be more real-timely suppressed. It can be understood that when one frame includes multiple scanning cycles, the detection fields of view corresponding to two adjacent scanning cycles are partially overlapped. As shown in FIG. 4b, FIG. 4b is a schematic diagram of detection fields of view corresponding to the m scanning and the m+1 scanning of the LiDAR. The detection fields of view corresponding to two adjacent scanning cycles can be partially overlapped vertically and/or horizontally. The emission strategy of the detection channel corresponding to the overlapped detection field of view corresponding to the m+1 scanning cycle can be adjusted according to the detected high-reflectivity object in the corresponding overlapped detection field of view in the m scanning cycle and the m+1 scanning cycle.

As another example, the LiDAR system can also be a complex scanning system. That is, the emission strategy of the first scanning cycle in the current scanning cycle is determined according to the point cloud data of the previous scanning cycle in the last frame. The application is not limited thereto.

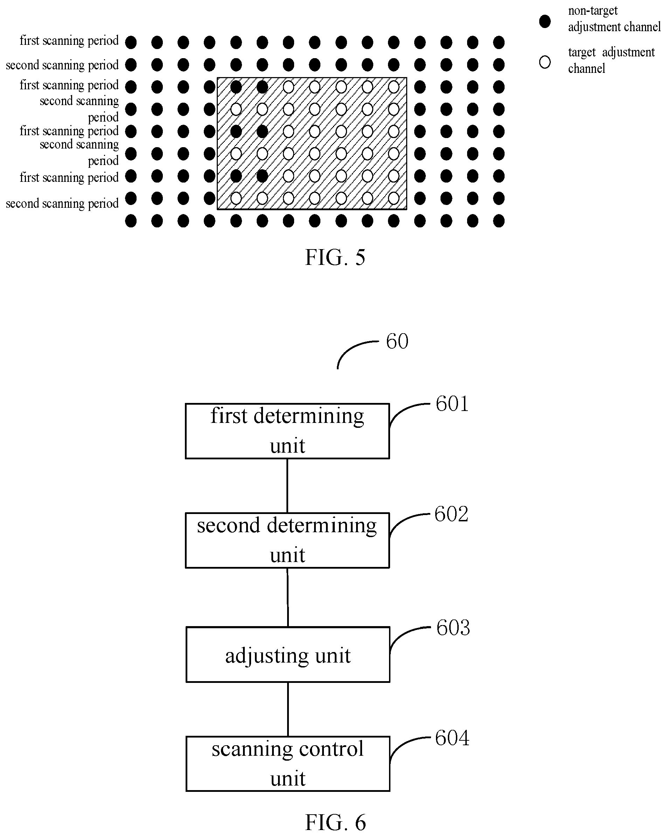

Referring to FIG. 5, FIG. 5 shows a process schematic diagram of the intra-frame control method of the complex scanning LiDAR system provided by the embodiment of the application. As shown in FIG. 5, the second scanning cycle can switch the corresponding high-reflectivity emission strategy to perform scanning according to the position of the high-reflectivity object in the point cloud data of the first scanning cycle, and the emission strategy can be adjusted more quickly.

Therefore, the LiDAR control method provided by the embodiment of the application can control the switch of the channel corresponding to the high-reflectivity object in the current scanning cycle to the high-reflectivity emission strategy in advance according to the position of the high-reflectivity object determined according to the point cloud data of the previous scanning cycle in the frame, can more quickly reduce the interference of the reflected echo generated by the high-reflectivity object, and improves the detection precision of the LiDAR.

In an embodiment of the application, S12 specifically can include the following steps:
determining a target adjustment channel according to the driving information of the vehicle and the spatial position of the high-reflectivity object.

In a specific application, the driving information of the vehicle can include the driving speed of the vehicle, the driving direction of the vehicle, and the like.

In a specific application, since the movement of the vehicle can cause a certain change in the position of the high-reflectivity object, after the spatial position of the high-reflectivity object is determined according to the point cloud data of the last frame or the point cloud data of the previous scanning cycle, the spatial position of the high-reflectivity object can be further corrected according to the driving information of the vehicle, and then the target adjustment channel is determined according to the spatial position of the high-reflectivity object after correction.

In an embodiment of the application, the step of determining the target adjustment channel according to the driving information of the vehicle and the spatial position of the high-reflectivity object specifically can include:
determining a position offset of the high-reflectivity object according to the driving speed and the driving direction of the vehicle;
determining a predicted position of the high-reflectivity object according to the position offset of the high-reflectivity object and the spatial position of the high-reflectivity object;
determining the target adjustment channel according to the predicted position of the high-reflectivity object.

In some embodiments, the LiDAR system can also predict a driving trajectory of the vehicle according to the driving information of the vehicle, and determine the position offset of the high-reflectivity object based on the predicted driving trajectory.

The step of determining the target adjustment channel according to the predicted position of the high-reflectivity object specifically can be determining which receiving channels receive the echo data corresponding to the point cloud of the predicted position, and then determining the corresponding emission channels.

In a specific application, the driving information of the vehicle can also include the steering information of the vehicle, the historical driving trajectory, and the like.

In a specific application, the driving trajectory of the vehicle can be further estimated in combination with the steering information of the vehicle, or a historical driving trajectory can be acquired, and possible driving trajectories such as vehicle steering and lane changing are determined based on the historical driving trajectory, and the position offset of the high-reflectivity object is determined based on the predicted driving trajectory.

In a specific application, if the predicted driving trajectory determines that the vehicle will continue to drive forward, the position offset can be calculated according to the driving speed of the vehicle and the scanning interval of the next frame scanning or the next scanning cycle. If the predicted driving trajectory determines that the vehicle will steer, the position offset can be calculated according to the driving speed of the vehicle, the steering direction, and the scanning interval of the next frame scanning or the next scanning cycle.

As can be seen, the LiDAR control method provided by the embodiment of the application can determine the position offset caused by the scanning time difference according to the driving information of the vehicle, can more accurately determine the position of the high-reflectivity object, and can better reduce the crosstalk caused by the high-reflectivity object.

In an embodiment of the application, the LiDAR control method can further include the following steps:
calculating a switching time margin according to the driving speed of the vehicle;
switching the emission strategy of the target adjustment channel according to the switching time margin.

In a specific application, the position of the high-reflectivity object can move between two frames or between two scans, therefore, by determining the switching time margin, the emission strategy of the target adjustment channel is adjusted to the high-reflectivity emission strategy in advance at the switching time margin, that is, the target adjustment channel is adjusted to the high-reflectivity emission strategy in advance, so that the position where the high-reflectivity object is located can be better covered, and the suppression of the reflection echo of the high-reflectivity object is further improved.

It should be noted that the calculation of the switching time margin according to the driving speed of the vehicle can be that a preset switching distance is set, and then the switching time margin is calculated based on the relationship of distance = speed * time. It should be further noted that the preset switching distance can be set according to actual needs, and the application does not make a specific limitation thereon.

As can be seen, the LiDAR control method provided by the embodiment of the application can switch the emission strategy of the target adjustment channel in advance according to the driving speed of the vehicle, so that the position where the high-reflectivity object is located can be better covered, and the suppression of the reflection echo of the high-reflectivity object is further improved.

It should be understood that the serial number of each step in the above embodiment does not mean the order of execution, and the execution order of each process should be determined according to its function and inherent logic, and should not constitute any limitation on the implementation process of the embodiment of the application.

Based on the LiDAR control method provided in the above embodiment, the embodiment of the application further provides an embodiment of a LiDAR control device for implementing the method embodiment.

Referring to FIG. 6, FIG. 6 is a schematic diagram of a structure of a LiDAR control device according to an embodiment of the present application. In the embodiment of the present application, the LiDAR control device includes units for performing the steps in the corresponding embodiment of FIG. 3. For details, please refer to FIG. 3 and the related description in the corresponding embodiment of FIG. 3. For ease of illustration, only the parts related to the present embodiment are shown. As shown in FIG. 6, the LiDAR control device 60 can include a first determining unit 601, a second determining unit 602, an adjusting unit 603, and a scanning control unit 604, wherein:

The first determining unit 601 is configured to, in a case where it is determined, according to the point cloud data of the previous scanning cycle, that there is a high-reflectivity object in the detection area, determine a spatial position of the high-reflectivity object according to the point cloud data of the previous scanning cycle.

The second determining unit 602 is configured to determine a target adjustment channel according to the spatial position of the high-reflectivity object.

The adjusting unit 603 is configured to adjust an emission strategy of the target adjustment channel to a high-reflectivity emission strategy.

The scanning control unit 604 is configured to control the LiDAR to perform scanning in a current scanning cycle according to the adjusted emission strategy.

In some implementations, the second determining unit 602 is specifically configured to determine the target adjustment channel according to driving information of the vehicle and the spatial position of the high-reflectivity object.

The previous scanning cycle and the current scanning cycle are in the same frame or in two adjacent frames.

In some implementations, the second determining unit 602 includes a correction unit and a determining unit.

The correction unit is configured to correct the spatial position of the high-reflectivity object according to the driving information of the vehicle.

The determining unit is configured to determine the target adjustment channel according to the predicted position of the high-reflectivity object.

In some implementations, the driving information includes a driving speed and a driving direction, and the second determining unit is specifically configured to determine a position offset of the high-reflectivity object according to the driving speed and the driving direction; determine a predicted position of the high-reflectivity object according to the position offset of the high-reflectivity object and the spatial position of the high-reflectivity object; and determine the target adjustment channel according to the predicted position of the high-reflectivity object.

In some implementations, the driving information includes steering information and a historical driving trajectory, and the second determining unit 602 is specifically configured to predict a driving trajectory of the vehicle according to the steering information and the historical driving trajectory; determine a position offset of the high-reflectivity object based on the predicted driving trajectory; determine a predicted position of the high-reflectivity object according to the position offset of the high-reflectivity object and the spatial position of the high-reflectivity object; and determine the target adjustment channel according to the predicted position of the high-reflectivity object.

In some implementations, the LiDAR control device further includes a calculating unit and a switching unit, wherein:

The calculating unit is configured to calculate a switching time margin according to a driving speed of the vehicle.

The switching unit is configured to switch the emission strategy of the target adjustment channel according to the switching time margin.

It should be noted that the information interaction and execution process between the units are based on the same concept as the method embodiments, and the specific functions and technical effects can be referred to the method embodiments, and will not be described here.

Therefore, the LiDAR control device provided by the embodiment of the application can also determine the position of the high-reflectivity object according to the point cloud data of the last frame, and control the switch of the channel corresponding to the high-reflectivity object in the current scanning cycle to the high-reflectivity emission strategy in advance, thereby better reducing the interference of the reflected echo generated by the high-reflectivity object and improving the detection precision of the LiDAR.

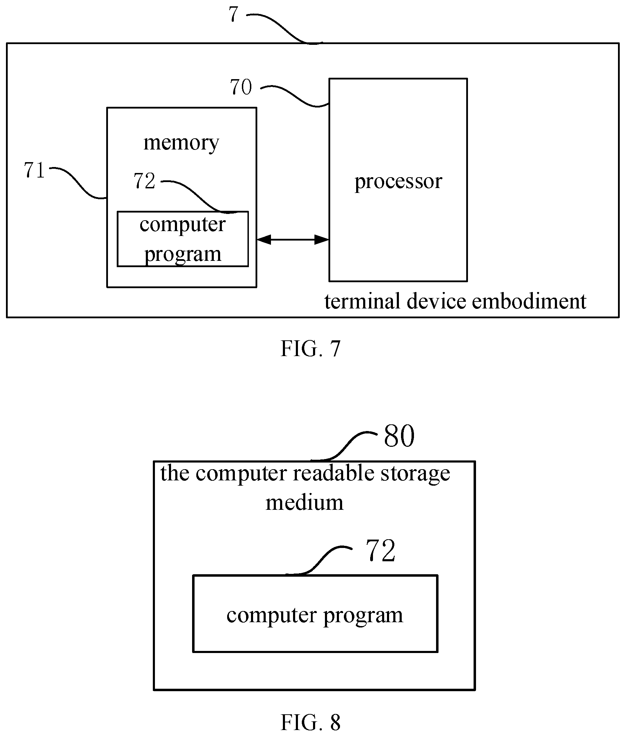

Fig. 7 is a schematic diagram of a structure of a terminal device according to another embodiment of the present application. As shown in Fig. 7, the terminal device 7 according to the embodiment comprises a processor 70, a memory 71, and a computer program 72, for example, an image segmentation program, stored in the memory 71 and executable on the processor 70. The processor 70 executes the computer program 72 to implement the steps in the LiDAR control method embodiments, for example, S11-S14 shown in Fig. 3. Alternatively, the processor 70 executes the computer program 72 to implement the functions of the modules/units in the terminal device embodiments, for example, the functions of the units 601-604 shown in Fig. 6.

For example, the computer program 72 can be divided into an obtaining unit, a determining unit, and a calculating unit. For details, refer to the related description in the corresponding embodiment of Fig. 7, and no further description is given here.

The terminal device can include but is not limited to the processor 70 and the memory 71. Those skilled in the art can understand that Fig. 7 is merely an example of the terminal device 7 and does not limit the terminal device 7, and the terminal device 7 can include more or less components than those shown in the figure, or combine some components, or different components, for example, the terminal device can also include an input/output device, a network access device, a bus, and the like.

The processor 70 can be a central processing unit (CPU), and can also be other general-purpose processors, digital signal processors (DSP), application specific integrated circuits (ASIC), field-programmable gate arrays (FPGA) or other programmable logic devices, discrete gates or transistor logic, discrete hardware components, or the like. The general-purpose processor can be a microprocessor, or the processor can also be any conventional processor, or the like.

The memory 71 can be an internal storage unit of the terminal device 7, for example, a hard disk or a memory of the terminal device 7. The memory 71 can also be an external storage device of the terminal device 7, for example, a plug-in hard disk, a smart media card (SMC), a secure digital (SD) card, a flash card, or the like, which is equipped on the terminal device 7. Further, the memory 71 can include both an internal storage unit and an external storage device of the terminal device 7. The memory 71 is used for storing the computer program and other programs and data required by the terminal device. The memory 71 can also be used for temporarily storing data that has been output or is to be output.

The embodiment of the application further provides a computer readable storage medium. Referring to FIG. 8, FIG. 8 is a structural schematic diagram of a computer readable storage medium provided by the embodiment of the application. As shown in FIG. 8, the computer readable storage medium 80 stores a computer program 72. When the computer program 72 is executed by a processor, the LiDAR control method can be implemented.

The embodiment of the application further provides a computer program product. When the computer program product is run on a terminal device, the terminal device is enabled to implement the LiDAR control method.

Those skilled in the art can clearly understand that, for the convenience and brevity of description, only the division of the above functional units and modules is exemplified, and in actual application, the above functions can be distributed to be completed by different functional units and modules according to requirements, that is, the internal structure of the terminal device is divided into different functional units or modules to complete all or part of the functions described above. Each functional unit and module in the embodiments can be integrated in one processing unit, or each unit can be physically present separately, or two or more units can be integrated in one unit. The integrated unit can be implemented in the form of hardware, or in the form of a software functional unit. In addition, the specific names of the functional units and modules are only for the convenience of mutual distinction, and are not used to limit the protection scope of the application. The specific working processes of the units and modules in the system can refer to the corresponding processes in the foregoing method embodiments, and will not be described here in.

In the above embodiments, the description of each embodiment has its own focus, and the parts not detailed or described in a certain embodiment can be referred to the related description of other embodiments.

Those of ordinary skill in the art can be aware that, in combination with the embodiments disclosed herein, units and algorithm steps of each example described with reference to the embodiments can be implemented by electronic hardware, or a combination of computer software and electronic hardware. Whether the functions are performed by hardware or software depends on particular applications and design constraints of the technical solutions. Professionals can use different methods to implement the described functions, but it should not be considered that such implementation goes beyond the scope of the present application.

The above embodiments are only used to illustrate the technical solutions of the present application, but not to limit them; although the present application is described in detail with reference to the foregoing embodiments, those of ordinary skill in the art should understand that the technical solutions recorded in the foregoing embodiments can still be modified, or some technical features can be replaced by equivalents; and these modifications or replacements do not make the essence of the corresponding technical solutions deviate from the spirit and scope of the technical solutions of the embodiments of the present application, and should be included in the protection scope of the present application.

## Claims

1. A LiDAR control method, comprising:
in a case where it is determined, according to point cloud data of a previous scanning cycle, that a high-reflectivity object exists within a detection area, determining a spatial position of the high-reflectivity object according to the point cloud data of the previous scanning cycle;
determining a target adjustment channel according to the spatial position of the high-reflectivity object;
adjusting a emission strategy of the target adjustment channel to a high-reflectivity emission strategy; and
controlling the LiDAR to perform a scan for a current scanning cycle according to the adjusted emission strategy.

2. The LiDAR control method according to claim 1, wherein the determining a target adjustment channel according to the spatial position of the high-reflectivity object, comprises:
determining a target adjustment channel according to vehicle travel information and the spatial position of the high-reflectivity object.

3. The LiDAR control method according to claim 2, wherein the determining a target adjustment channel according to vehicle travel information and the spatial position of the high-reflectivity object, comprises:
correcting the spatial position of the high-reflectivity object according to the vehicle travel information; and
determining the target adjustment channel according to the corrected spatial position of the high-reflectivity object.

4. The LiDAR control method according to claim 2, wherein the vehicle travel information includes a travel speed and a travel direction, and the determining a target adjustment channel according to vehicle travel information and the spatial position of the high-reflectivity object, comprises:
determining, according to the travel speed and the travel direction, a position displacement of the high-reflectivity object;
determining, according to the position displacement of the high-reflectivity object and the spatial position of the high-reflectivity object, a predicted position of the high-reflectivity object; and
determining a target adjustment channel according to the predicted position of the high-reflectivity object.

5. The LiDAR control method according to claim 2, wherein the vehicle travel information includes steering information and historical travel trajectories, and the determining a target adjustment channel according to vehicle travel information and the spatial position of the high-reflectivity object comprises:
predicting a travel trajectory of the vehicle according to the steering information and the historical travel trajectories;
determining a position displacement of the high-reflectivity object based on the predicted travel trajectory;
determining, according to the position displacement of the high-reflectivity object and the spatial position of the high-reflectivity object, a predicted position of the high-reflectivity object; and
determining a target adjustment channel according to the predicted position of the high-reflectivity object.

6. The LiDAR control method according to claim 1, further comprising:
calculating a switching time margin according to a speed of a vehicle; and
switching a emission strategy of a target adjustment channel according to the switching time margin.

7. The LiDAR control method according to any one of claims 1 to 6, wherein the previous scanning cycle is in the same frame as or in a same frame as the current scanning cycle.

8. A LiDAR control apparatus comprising:
a first determining unit, configured to determine a spatial position of a high-reflectivity object according to point cloud data of a previous scanning cycle in the case that it is determined that there is the high-reflectivity object in a detection area according to the point cloud data of the previous scanning cycle;
a second determining unit, configured to determine a target adjustment channel according to the spatial position of the high-reflectivity object;
an adjusting unit, configured to adjust a emission strategy of the target adjustment channel to a high-reflectivity emission strategy; and
a scanning control unit, configured to control a LiDAR to perform scanning in a current scanning cycle according to the adjusted emission strategy.

9. A terminal device, comprising a memory, a processor and a computer program stored in the memory and capable of running on the processor, wherein when the processor executes readable instructions of the computer program, the LiDAR control method of any one of claims 1 to 7 is implemented.

10. A computer readable storage medium storing a computer program, wherein when readable instructions of the computer program are executed by a processor, the LiDAR control method of any one of claims 1 to 7 is implemented.
